# EUROPEAN PATENT APPLICATION

(11) **EP 2 530 965 A1**
(43) Date of publication of application: **05.12.2012**
(21) Application number: 11737144.3
(22) Date of filing: 28.01.2011
(51) Int. Cl.: H04W 16/20, H04W 84/10

(54) **DETERMINATION PROGRAM, DETERMINATION DEVICE, AND DETERMINATION METHOD**

(30) Priority: 29.01.2010 JP 2010019459
(71) Applicant: NTT DOCOMO, INC., Chiyoda-ku Tokyo 100-6150 (JP)
(72) Inventor: HOSONO, Hiroyuki, Tokyo 100-6150 (JP); TERAYAMA, Takeshi, Tokyo 100-6150 (JP); OKAMOTO Takeshi, Tokyo 100-6150 (JP)
(74) Representative: HOFFMANN EITLE
(86) International application number: PCT/JP2011/051719
(87) International publication number: WO 2011/093434

(57) **Abstract**

A determination device 20 includes a measurement unit 21 configured to measure the reception level of a received signal at each of N frequencies where N is the number of frequencies selectable by a specific cell radio base station, a comparison unit 23 configured to compare the N-th reception level in descending order of the reception level, among the reception levels measured at N frequencies by the measurement unit, with a tolerable interference threshold which is accepted by the specific cell radio base station, and a determination unit 24 configured to determine that a specific cell radio base station is installable if the N-th reception level is lower than the tolerable interference threshold.

## Description

### TECHNICAL FIELD

The present invention relates to a determination program, a determination device, and a determination method for determining whether or not a specific cell radio base station having a specific cell is installable.

### BACKGROUND ART

In general, a public cell radio base station configured to manage a public cell needs to satisfy the quality level of services randomly requested by mobile communication terminals. Therefore, before installation of a new public cell radio base station, an installation position and a configuration of the new public cell radio base station are calculated by simulation based on estimations of the service area and traffic of an existing public cell radio base station. Moreover, radio parameters (a transmission power level and frequency of a downlink shared control channel) to be set in the new public cell radio base station are also calculated by simulation.

Thus, for the installation of a new public cell radio base station, actual measurement and check or operation and maintenance are required for the service area of the existing public cell radio base station, communication quality in the service area, system capacity, and the like.

Meanwhile, specific cells called CSG (Closed Subscriber Group) cells, home cells, femtocells and the like have been recently known (e.g., Non-patent document 1). Note that an access type is configurable in the specific cell. The access type is "Closed," "Hybrid" or "Open."

The "Closed" specific cell is configured to permit only a particular user (UE; User Equipment) to receive provision of services. The "Hybrid" specific cell is configured to permit a particular user to perform communications with a higher quality than other users (non-particular users). The "Open" specific cell is configured to permit all the users to receive provision of services, as is the case with a general public cell.

### PRIOR ART DOCUMENT

### PATENT DOCUMENT

Non-patent document 1: 3GPP TS22.220

### SUMMARY OF THE INVENTION

Here, it is preferable that the specific cells be cells provided on a small scale and a large scale. Also, the specific cell may be provided in each of houses in a complex housing such as a condominium, for example.

In such a case, the installation of a specific cell radio base station configured to manage a specific cell requires considerations on interference from another specific cell radio base station, interference from a public cell radio base station configured to transmit signals using transmission power larger than that used by the specific cell radio base station, and the like.

Thus, a user considering the installation of a specific cell radio base station is deemed to have a demand to easily determine whether or not a specific cell radio base station is installable before purchase and installation of the specific cell radio base station.

Therefore, the present invention has been made in consideration of the foregoing problem. It is an objective of the present invention to provide a determination program, a determination device, and a determination method, which allow easy determination on whether or not a specific cell radio base station is installable.

A determination program according the first feature determines whether or not a specific cell radio base station having a specific cell is installable in a mobile communication system having a public cell. The program allowing a computer to execute a measurement step of measuring the reception level of a received signal at each of N frequencies where N is the number of frequencies selectable by the specific cell radio base station, a comparison step of comparing the N-th reception level in descending order of the reception level, among the reception levels measured at N frequencies in the measurement step, with a tolerable interference threshold which is accepted by the specific cell radio base station, and a determination step of determining that the specific cell radio base station is installable if the N-th reception level is lower than the tolerable interference threshold.

In the first feature, in the measurement step, at least one of total received signal power and received power of a pilot signal may be measured as the reception level.

In the first feature, the computer may further execute a holding step of holding the reception levels measured in the measurement step with distinction among the N frequencies.

In the first feature, the computer may further execute a holding step of holding the reception levels measured in the measurement step without among the N frequencies.

A determination device according the second feature is configured to determine whether or not a specific cell radio base station having a specific cell is installable in a mobile communication system having a public cell. The determination device includes a measurement unit configured to measure the reception level of a received signal at each of N frequencies where N is the number of frequencies selectable by a specific cell radio base station, a comparison unit configured to compare the N-th reception level in descending order of the reception level, among the reception levels measured at N frequencies by the measurement unit, with a tolerable interference threshold which is accepted by the specific cell radio base station, and a determination unit configured to determine that a specific cell radio base station is installable if the N-th reception level is lower than the tolerable interference threshold.

A determination method according the third feature is for determining whether or not a specific cell radio base station having a specific cell is installable in a mobile communication system having a public cell. The method includes a measurement step of measuring the reception level of a received signal at each of N frequencies where N is the number of frequencies selectable by the specific cell radio base station, a comparison step of comparing the N-th reception level in descending order of the reception level, among the reception levels measured at N frequencies in the measurement step, with a tolerable interference threshold which is accepted by the specific cell radio base station, and a determination step of determining that the specific cell radio base station is installable if the N-th reception level is lower than the tolerable interference threshold.

### BRIEF DESCRIPTION OF DRAWINGS

[Fig. 1] Fig. 1 is a diagram showing a mobile communication system 100 according to a first embodiment.
[Fig. 2] Fig. 2 is a diagram showing a determination device 20 according to the first embodiment.
[Fig. 3] Fig. 3 is a flowchart showing operations of the determination device 20 according to the first embodiment.

### MODE FOR CARRYING OUT THE INVENTION

A mobile communication system according to an embodiment of the present invention is described below with reference to the drawings. Note that, in the following description of the drawings, same or similar reference numerals denote same or similar elements and portions.

In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

### [Overview of Embodiment]

A determination device according to the embodiment determines whether or not a specific cell radio base station having a specific cell is installable in a mobile communication system having a public cell. The determination device includes: a measurement unit configured to measure the reception level of a received signal at each of N frequencies where N is the number of frequencies selectable by a specific cell radio base station; a comparison unit configured to compare the N-th reception level in descending order of the reception level, among the reception levels measured at N frequencies by the measurement unit, with a tolerable interference threshold which is accepted by the specific cell radio base station; and a determination unit configured to determine that a specific cell radio base station is installable if the N-th reception level is lower than the tolerable interference threshold.

In the embodiment, the determination unit determines that a specific cell radio base station is installable if the N-th reception level is lower than the tolerable interference threshold.

Here, it should be noted that a mobile communication terminal is configured to be able to identify (receive) N frequencies. More specifically, the number (N) of frequencies selectable by the specific cell radio base station is equal to the number (N) of frequencies which can be identified by the mobile communication terminal.

Therefore, if the N-th reception level is lower than the tolerable interference threshold, interference from a public cell or a specific cell is smaller than the tolerable interference threshold at least at one of the frequencies selectable by the specific cell radio base station. Thus, the specific cell radio base station can be used.

In other words, at least at one of the frequencies selectable by the specific cell radio base station, a desired service area can be secured as a service area of the specific cell radio base station. Therefore, a mobile communication terminal located inside the desired service area can receive a signal from the specific cell radio base station.

Thus, it can be easily determined whether or not a specific cell radio base station is installable.

Note that, in the embodiment, it is preferable that the specific cells are cells provided on a small scale and a large scale. Moreover, it is preferable that the specific cells are cells configured using a HNB (Home Node B), a HeNB (Home Evolved Node B), a femto BTS, and the like.

### [First Embodiment]

### (Configuration of Mobile Communication System)

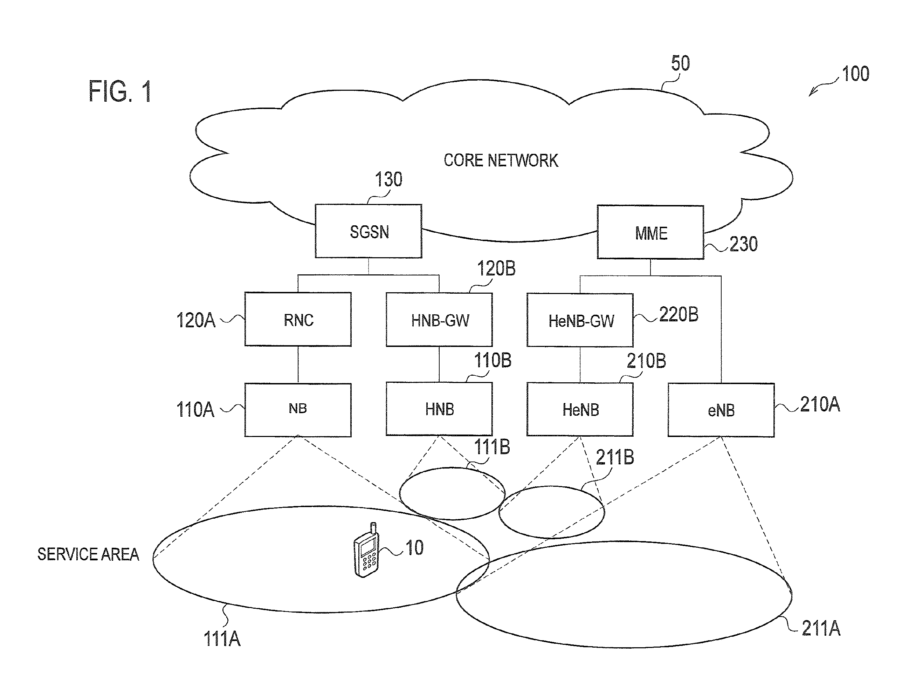

A configuration of a mobile communication system according to a first embodiment is described below with reference to the drawings. Fig. 1 is a diagram showing a mobile communication system 100 according to the first embodiment.

As shown in Fig. 1, the mobile communication system 100 includes a communication terminal device 10 (hereinafter referred to as the UE 10) and a core network 50. The mobile communication system 100 also includes a first communication system and a second communication system.

The first communication system is, for example, a communication system compatible with a UMTS (Universal Mobile Telecommunication System). The first communication system includes a base station 110A (hereinafter referred to as the NB 110A), a home base station 110B (hereinafter referred to as the HNB 110B), an RNC 120A, a home base station gateway 120B (hereinafter referred to as the HNB-GW 120B), and a SGSN 130.

Note that a radio access network (UTRAN: Universal Terrestrial Radio Access Network) compatible with the first communication system includes the NB 110A, HNB 110B, RNC 120A and HNB-GW 120B.

The second communication system is, for example, a communication system compatible with an LTE (Long Term Evolution). The second communication system includes a base station 210A (hereinafter referred to as the eNB 210A) , a home base station 210B (hereinafter referred to as the HeNB 210B), a home base station gateway 220B (hereinafter referred to as the HeNB-GW 220B), and an MME 230.

Note that a radio access network (E-UTRAN: Evolved Universal Terrestrial Radio Access Network) compatible with the second communication system includes the eNB 210A, HeNB 210B and HeNB-GW 220B.

The UE 10 is a device (User Equipment) configured to communicate with the first communication system or the second communication system. For example, the UE 10 has a function to perform radio communication with the NB 110A and the HNB 110B, or a function to perform radio communication with the eNB 210A and the HeNB 210B.

The NB 110A is a device (NodeB) having a public cell 111A and configured to perform radio communication with the UE 10 present in the public cell 111A.

The HNB 110B is a device (Home NodeB) having a specific cell 111B and configured to perform radio communication with the UE 10 present in the specific cell 111B.

The RNC 120A is a device (Radio Network Controller) connected to the NB 110A and configured to establish a radio connection (RRC Connection) with the UE 10 present in the public cell 111A.

The HNB-GW 120B is a device (Home NodeB Gateway) connected to the HNB 110B and configured to establish a radio connection (RRC Connection) with the UE 10 present in the specific cell 111B.

The SGSN 130 is a device (Serving GPRS Support Node) configured to perform packet switching in a packet-switched domain. The SGSN 130 is provided in the core network 50. Although omitted in Fig. 1, a device (MSC; Mobile Switching Center) configured to perform circuit switching in a circuit-switched domain may be provided in the core network 50.

The eNB 210A is a device (evolved NodeB) having a public cell 211A and configured to perform radio communication with the UE 10 present in the public cell 211A.

The HeNB 210B is a device (Home evolved NodeB) having a specific cell 211B and configured to perform radio communication with the UE 10 present in the specific cell 211B.

The HeNB-GW 220B is a device (Home evolved NodeB Gateway) connected to the HeNB 210B and configured to manage the HeNB 210B.

The MME 230 is a device (Mobility Management Entity) connected to the eNB 210A and configured to manage the mobility of the UE 10 having a radio connection established with the eNB 210A. Moreover, the MME 230 is a device connected to the HeNB 210B through the HeNB-GW 220B and configured to manage the mobility of the UE 10 having a radio connection established with the HeNB 210B.

Note that the public cell and the specific cell should be understood as the function to perform the radio communication with the UE 10. However, the public cell and the specific cell are also used as the term representing a service area of each cell. Moreover, the cells such as the public cell and the specific cell are distinguished from each other by frequency, spread code, time slot or the like used in the cell.

The specific cell may be called a femtocell, CSG (Closed Subscriber Group) cell, home cell or the like. Moreover, the specific cell is configured to be settable with an access type for defining UEs 10 allowed to access the specific cell. The access type is "Closed," "Hybrid," or "Open".

The "Closed" specific cell is configured to permit only a particular user (UE; User Equipment) managed by the specific cell to receive provision of services.

The "Hybrid" specific cell is configured to permit a particular user managed by the specific cell to perform communications with a high quality and is configured to permit a non-particular user not managed by the specific cell to perform communications with a best effort quality.

The "Open" specific cell is configured to permit all the UEs 10 to receive provision of services, as is the case with the public cell. Here, in the "Open" cell, UEs 10 can perform communications with equal quality without being distinguished as to whether the UEs 10 are managed by the specific cell.

Note that the access type may also be "ACCESS CLASS BARRED" for prohibiting an access of the UE 10 for each access class or "CELL BARRED" for prohibiting an access of the UE 10 for each cell.

### (Configuration of Determination Device)

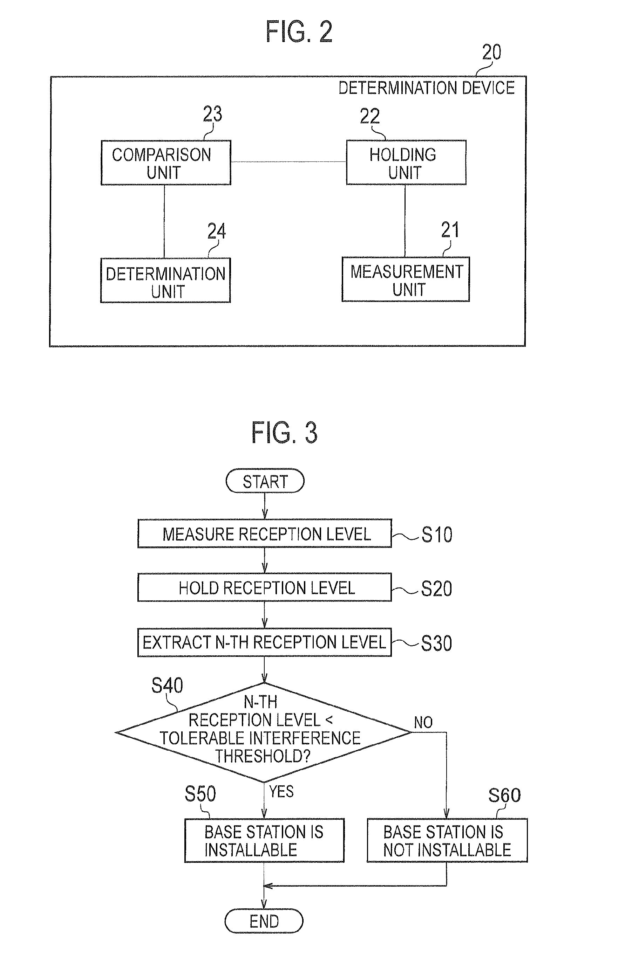

A configuration of a determination device according to the first embodiment is described below with reference to the drawing. Fig. 2 is a diagram showing a determination device 20 according to the first embodiment.

Here, the determination device 20 determines whether or not a new specific cell radio base station having a specific cell is installable. The determination device 20 is provided in the UE 10 described above, for example. Note that the new specific cell radio base station may be the HNB 110B or HeNB 210B.

The number of frequencies selectable by the new specific cell radio base station is "N." More specifically, it should be noted that the new specific cell radio base station is designed such that the number of frequencies selectable by the new specific cell radio base station is equal to the number of frequencies which can be received by the UE 10.

Specifically, as shown in Fig. 2, the determination device 20 includes a measurement unit 21, a holding unit 22, a comparison unit 23 and a determination unit 24.

The measurement unit 21 measures the reception level of a received signal for each of N frequencies. Specifically, the measurement unit 21 measures the reception level of a signal received from a public cell (the public cell 111A or public cell 211A) provided around the determination device 20. Alternatively, the measurement unit 21 measures the reception level of a signal received from a specific cell (the specific cell 111B or specific cell 211B) provided around the determination device 20.

For example, the reception level of a signal received from the public cell 111A (UMTS) may be received power of a pilot signal such as RSCP (Received Signal Code Power) or RSSI (Received Signal Strength Indicator). Meanwhile, the reception level of a signal received from the public cell 211A (LTE) may be total received signal power such as RSRP (Reference-Signal-Received-Power).

The holding unit 22 holds the reception level measured by the measurement unit 21. Here, the holding unit 22 may hold the reception levels measured by the measurement unit 21 with distinction among the N frequencies. In other words, the holding unit 22 may hold N reception levels while holding the correspondence relationship between the reception level and the frequency. Alternatively, the holding unit 22 may hold the reception levels measured by the measurement unit 21 without distinction among the N frequencies. In other words, the holding unit 22 may hold the N reception levels, but does not have to hold the correspondence relationship between the reception level and the frequency.

The comparison unit 23 compares the N-th reception level, among the reception levels measured at N frequencies by the measurement unit 21, with a tolerable interference threshold which is accepted by the new specific cell radio base station. Note that the N-th reception level is the lowest reception level among the reception levels measured by the measurement unit 21.

The tolerable interference threshold may be dynamically set based on the size of the service area (area radius) of the new specific cell radio base station. The tolerable interference threshold may be set in advance.

The determination unit 24 determines that a new specific cell radio base station is installable if the N-th reception level is lower than the tolerable interference threshold. On the other hand, the determination unit 24 determines that a new specific cell radio base station cannot be installed if the N-th reception level is equal to or higher than the tolerable interference threshold.

### (Operations of Determination Device)

With reference to the drawing, operations of the determination device according to the first embodiment are described below. Fig. 3 is a flowchart showing operations of the determination device 20 according to the first embodiment.

As shown in Fig. 3, in Step 10, the determination device 20 determines the reception level of a received signal for each of N frequencies.

Note that "N" is the number of frequencies selectable by a new specific cell radio base station, as described above. Moreover, "N" is the number of frequencies which can be received by the UE 10.

In Step 20, the determination device 20 holds the reception level measured in Step 10. Here, the determination device 20 may hold the reception level measured in Step 10 with distinction among the N frequencies. Alternatively, the determination device 20 may hold the reception level measured in Step 10 without distinction among the N frequencies.

In Step 30, the determination device 20 extracts the N-th reception level from the reception levels held in Step 20.

In Step 40, the determination device 20 compares the N-th reception level with a tolerable interference threshold which is accepted by a new specific cell radio base station. If the N-th reception level is lower than the tolerable interference threshold, the determination device 20 moves to Step 50. On the other hand, if the N-th reception level is equal to or higher than the tolerable interference threshold, the determination device 20 moves to Step 60.

In Step 50, the determination device 20 determines that a new specific cell radio base station is installable.

In Step 60, the determination device 20 determines that a new specific cell radio base station cannot be installed.

### (Advantageous Effects)

In the first embodiment, the determination unit 24 determines that a specific cell radio base station is installable if the N-th reception level is lower than the tolerable interference threshold.

Here, it should be noted that the UE 10 is configured to be able to identify (receive) N frequencies. More specifically, the number "N" of frequencies selectable by the specific cell radio base station is equal to the number "N" of frequencies which can be identified by the UE 10.

Therefore, if the N-th reception level is lower than the tolerable interference threshold, interference from a public cell or a specific cell is smaller than the tolerable interference threshold at least at one of the frequencies selectable by the specific cell radio base station. Thus, the specific cell radio base station can be used.

In other words, at least at one of the frequencies selectable by the specific cell radio base station, a desired service area can be secured as a service area of the specific cell radio base station. Therefore, a mobile communication terminal located inside the desired service area can receive a signal from the specific cell radio base station.

Thus, it can be easily determined whether or not a specific cell radio base station is installable.

### [Other Embodiments]

While the present invention has been described by using the embodiment described above. However, it should not be understood that the description and drawings which constitute part of this disclosure limit the present invention. From this disclosure, various alternative embodiments, examples, and operation techniques will be easily found by those skilled in the art.

The respective steps shown in Fig. 3 may be provided as a determination program to be executed by a computer. More specifically, the determination program allows the computer to execute the steps shown in Fig. 3. Moreover, the determination program may allow a computer provided in the communication terminal device 10 to execute the steps shown in Fig. 3.

Note that the operation of the determination device 20 may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM) , an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the determination device 20. Also, the storage medium and the processor may be provided in the determination device 20 as a discrete component.

Note that the entire content of Japanese Patent Application No. 2010-019459 (filed on January 29, 2010) is incorporated herein by reference.

### INDUSTRIAL APPLICABILITY

The present invention is useful in radio communication and the like since the invention can provide a determination program, a determination device, and a determination method, which allow for easy determination of whether or not a specific cell radio base station is installable.

### EXPLANATION OF THE REFERENCE NUMERALS

10... communication terminal device, 20... determination device, 21... measurement unit, 22... holding unit, 23... comparison unit, 24... determination unit, 50... core network, 100... mobile communication system, 110A... NB, 110B... HNB, 111A... public cell, 111B... specific cell, 120A... RNC, 120B... HNB-GW, 130... SGSN, 210A... eNB, 210B...HeNB, 211A... public cell, 211B... specific cell, 220B... HeNB-GW, 230... MME

## Claims

1. A determination program for determining whether or not a specific cell radio base station having a specific cell is installable in a mobile communication system having a public cell, the program allowing a computer to execute:
a measurement step of measuring the reception level of a received signal at each of N frequencies where N is the number of frequencies selectable by the specific cell radio base station;
a comparison step of comparing the N-th reception level in descending order of the reception level, among the reception levels measured at N frequencies in the measurement step, with a tolerable interference threshold which is accepted by the specific cell radio base station; and
a determination step of determining that the specific cell radio base station is installable if the N-th reception level is lower than the tolerable interference threshold.

2. The determination program according to claim 1, wherein in the measurement step, at least one of total received signal power and received power of a pilot signal is measured as the reception level.

3. The determination program according to claim 1, allowing the computer to further execute:
a holding step of holding the reception levels measured in the measurement step with distinction among the N frequencies.

4. The determination program according to claim 1, allowing the computer to further execute:
a holding step of holding the reception levels measured in the measurement step without among the N frequencies.

5. A determination device configured to determine whether or not a specific cell radio base station having a specific cell is installable in a mobile communication system having a public cell, comprising:
a measurement unit configured to measure the reception level of a received signal at each of N frequencies where N is the number of frequencies selectable by a specific cell radio base station;
a comparison unit configured to compare the N-th reception level in descending order of the reception level, among the reception levels measured at N frequencies by the measurement unit, with a tolerable interference threshold which is accepted by the specific cell radio base station; and
a determination unit configured to determine that a specific cell radio base station is installable if the N-th reception level is lower than the tolerable interference threshold.

6. A determination method for determining whether or not a specific cell radio base station having a specific cell is installable in a mobile communication system having a public cell, the method comprising:
a measurement step of measuring the reception level of a received signal at each of N frequencies where N is the number of frequencies selectable by the specific cell radio base station;
a comparison step of comparing the N-th reception level in descending order of the reception level, among the reception levels measured at N frequencies in the measurement step, with a tolerable interference threshold which is accepted by the specific cell radio base station; and
a determination step of determining that the specific cell radio base station is installable if the N-th reception level is lower than the tolerable interference threshold.
